# EUROPÄISCHE PATENTSCHRIFT

(11) **EP 1 726 084 B1**
(45) Veröffentlichungstag und Bekanntmachung des Hinweises auf die Patenterteilung: **23.09.2009**
(21) Anmeldenummer: 05733834.5
(22) Anmeldetag: 12.03.2005
(51) Int. Cl.: H02K 41/02, B60L 13/10, E01B 25/32

(54) **MAGNETSCHWEBEBAHN MIT EINER VORRICHTUNG ZUR BERÜHRUNGSLOSEN, INDUKTIVEN ÜBERTRAGUNG VON ENERGIE VON EINEM FAHRWEG AUF EIN MAGNETSCHWEBEFAHRZEUG**
MAGNETIC LEVITATION TRAIN PROVIDED WITH A CONTACTLESS INDUCTIVE POWER TRANSMISSION DEVICE FOR A MAGNETIC LEVITATION VEHICLE RAILWAY
TRAIN A SUSTENTATION MAGNETIQUE PRESENTANT UN DISPOSITIF A TRANSMISSION D'ENERGIE INDUCTIVE, SANS CONTACT, D'UNE VOIE DE CIRCULATION A UN VEHICULE A SUSTENTATION MAGNETIQUE

(30) Priorität: 19.03.2004 DE 102004013996; 13.04.2004 DE 102004018308
(43) Veröffentlichungstag der Anmeldung: 29.11.2006
(73) Patentinhaber: ThyssenKrupp Transrapid GmbH, 34127 Kassel (DE)
(72) Erfinder: LÖSER, Friedrich, 85521 Riemerling (DE); MILLER, Luitpold, 85521 Ottobrunn (DE)
(74) Vertreter: Freiherr von Schorlemer, Reinfried
(86) Internationale Anmeldenummer: PCT/DE2005/000457
(87) Internationale Veröffentlichungsnummer: WO 2005/091476

(56) Entgegenhaltungen:
- DE-A1- 2 306 292
- DE-A1- 3 237 373
- US-A- 5 904 101

## Beschreibung

Die Erfindung betrifft eine Magnetschwebebahn der im Oberbegriff des Anspruchs 1 angegebenen Gattung.

Die Bordenergie üblicher Magnetschwebebahnen wird in der Regel berührungslos mit Hilfe von Lineargeneratoren erzeugt, die in die Magnetpole wenigstens einer, zum Tragen und/oder Führen eines Magnetschwebefahrzeugs bestimmten Magnetanordnung integriert sind und z.B. mit einem Langstator zusammenwirken (z.B. DE 34 10 119 A1). Die Energieerzeugung hängt dabei von der Geschwindigkeit des Magnetschwebefahrzeugs ab, weshalb bisherige Vorrichtungen erst ab Geschwindigkeiten von ca. 100 km/h den vollen, u.a. für die Funktionen "Tragen", "Führen" und "Bremsen" erforderlichen Energiebedarf des Magnetschwebefahrzeugs decken. Entsprechendes gilt für Magnetschwebefahrzeuge, deren Schwebezustand nicht durch Anziehungskräfte sondern durch Abstoßungskräfte erzeugt wird (z.B. DE-A-32 37 373). Deswegen sind längs des Fahrwegs dort, wo die Geschwindigkeit des Magnetschwebefahraeugs geringer oder Null ist (z.B. in Bahnhöfen), zusätzliche Energiequellen erforderlich. Dazu gehören einerseits leistungsstarke, im Magnetschwebefahrzeug mitgeführte Batterien, andererseits externe Mittel wie z.B. zumindest längs Langsamfahrabschnitten des Fahrwegs verlegte Stromschienen, denen am Magnetschwebefahrzeug angebrachte Stromabnehmer zugeordnet sind (z.B. US-A-5 904 101). Letzteres kann es erforderlich machen, das Magnetschwebefahrzeug bei Betriebsstörungen nur dort anzuhalten, wo eine solche externe Stromversorgung vorhanden ist oder den in diesen Abschnitten benötigten Energiebedarf durch im Fahrzeug angeordnete Batterien zu decken. Außerdem ist der finianzielle Aufwand für derartige Vorrichtungen vergleichsweise groß. Schließlich erfordern diese Vorrichtungen eine ständige Wartung aufgrund von Entladungsvorgängen in den Batterien oder aufgrund eines mechanischen Verschleißes, so daß sie nicht ausreichend sicher arbeiten. Eine ausfallsichere Bordenergieversorgung ist daher bisher selbst dann nicht gegeben, wenn im Magnetschwebefahrzeug mehrere redundante Bordnetze vorgesehen werden.

Besonders störend wirken bei der beschriebenen Energieversorgung die Pufferbatterien. Sie weisen bezüglich Volumen, Gewicht, Kosten und Wartungsaufwand erhebliche Nachteile auf, die sich vor allem negativ auf die Wirtschaftlichkeit auswirken.

Schließlich sind Magnetschwebebahnen mit in den Fahrzeugen montiertn Antriebsmotoren bekannt (z.B. DE-A-23 06 292). In diesen Fällen ist es erforderlich, die gesamte Antriebsenergie vom Fahrweg auf die Fahrzeuge zu übertragen, da Bordbatterien oder in den Fahrzeugen angeordnete Energieerzeuger hierfür nicht ausreichend wären. Die Energieübertragung erfolgt hier in Langsamfahrbereichen mit Hilfe von im Fahrweg installierten ersten Stromschienen und in Schnellfahrbereichen mit an die ersten Stromschienen angeschlossenen, zweiten Stromschienen, die die Primärwicklungen von Transformatoren bilden, deren Eisenkerne und Sekundärwicklungen in den Fahrzeugen untergebracht sind.

Daneben ist es bei Verkehrssystemen allgemein bekannt, eine berührungslose Energieübertragung vom Fahrweg auf ein Fahrzeug mit Hilfe von am Fahrweg montierten, an hochfrequente Wechselspannungen angelegten Leiterschleifen zu bewirken, denen eine am Fahrzeug angeordnete, zur Energieauskopplung bestimmte Leiterschleife zugeordnet ist. Eine sichere Energieversorgung allein mit diesen Mitteln ist bisher ebenfalls nicht möglich.

Der vorliegenden Erfindung liegt daher das technische Problem zugrunde, eine Magnetschwebebahn mit einer weitgehend ausfällsicheren Energie-Versorgungsanlage zu versehen, die es insbesondere ermöglicht, ohne die bisher unvermeidlichen Pufferbatterien in den Fahrzeugen und bei Bedarf auch ohne zusätzliche Lineargeneratoren od. dgl. auszukommen.

Eine Lösung dieses Problems gelingt mit den Merkmalen des Anspruchs 1.

Die Erfindung geht von der Überlegung aus, die Vorrichtung zur berührungslosen Energieübertragung anstatt mit Lineargeneratoren oder auch zusätzlich zu diesen mit elektronisch arbeitenden Mitteln zu versehen, die in Streckenbereichen, in denen der Bedarf an Bordenergie nicht oder nicht vollständig über Lineargeneratoren oder andere Mittel gedeckt werden kann, für eine ausreichende Energieübertragung vom Fahrweg auf das Fahrzeug sorgen. Diese Mittel sind nicht nur bei niedrigen Geschwindigkeiten und auch im Stillstand der Magnetschwebefahrzeuge wirksam, sondern auch redundant, weshalb auf alternative Maßnahmen wie z.B. Pufferbatterien in den Fahrzeugen, Stromschienen längs des Fahrwegs od. dgl. vollständig verzichtet werden kann. Dabei kann die gewünschte Redundanz im Prinzip beliebig hoch bemessen werden, ohne daß dadurch Volumen, Gewicht, Kosten und Wartungsaufwand im Fahrzeug wesentlich erhöht werden.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Teilschnitt durch ein übliches Magnetschwebefahrzeug im Bereich eines mit einem Langstator versehen Fahrwegs;
Fig. 2 die Vorderansicht einer Magnetanordnung mit einer Empfängerspule für die berührungslose Energieübertragung, von der Seite eines Trägers des Fahrwegs her gesehen;
Fig. 3 einen Schnitt längs der Linie III - III der Fig. 2;
Fig. 4 eine perspektivische Vorderansicht der Magnetanordnung nach Fig. 2;
Fig. 5 eine vergrößerte Einzelheit X der Fig. 4; und
Fig. 6 ein Blockdiagramm für eine erfindungsgemäße Bordenergieversorgung.

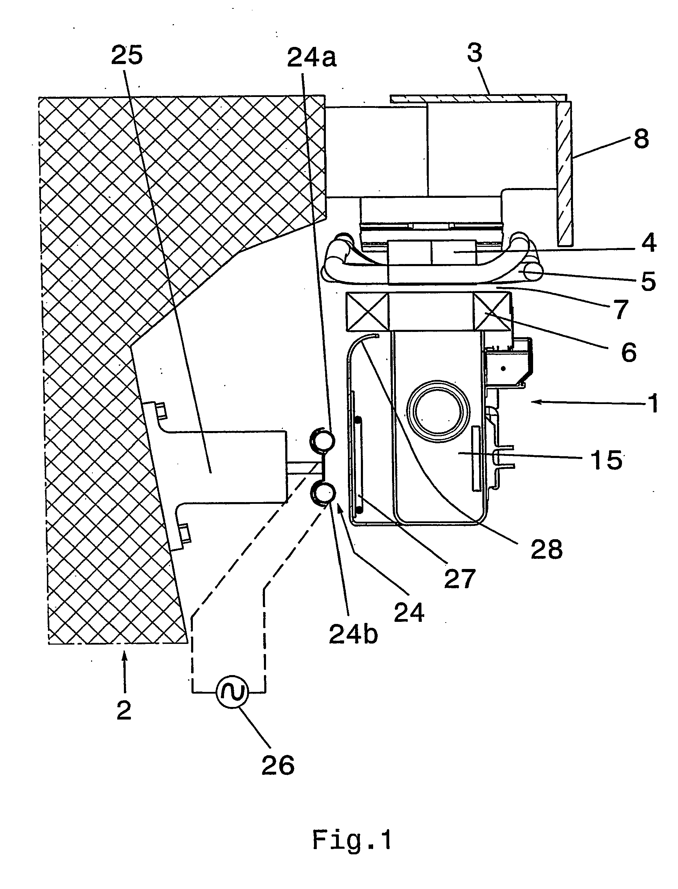

Fig. 1 zeigt schematisch einen Querschnitt durch eine Magnetschwebebahn mit einem Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf oder an diesen montierte Fahrwegplatten 3 enthält. Der Antrieb des Magnetschwebefahrzeugs 1 erfolgt z.B. mittels eines Langstatormotors, der unterhalb der Fahrwegplatte 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen 5 eingelegt sind, die mit Drehstrom variabler Amplitude und Frequenz gespeist werden. Das eigentliche Erregerfeld des Langstatormotors wird durch wenigstens einen Tragmagneten 6 erzeugt, der in nicht näher dargestellter Weise am Magnetschwebefahrzeug 1 befestigt ist und den in Fig. 1 nach unten offenen Nuten der Statorpakete 4 zugewandte Magnetpole aufweist. Der Tragmagnet 6 stellt nicht nur das Erregerfeld bereit, sondern erfüllt auch die Funktion des Tragens und Schwebens, indem er beim Betrieb des Magnetschwebefahrzeugs 1 einen vorgegebenen Spalt 7 von z.B. 10 mm zwischen sich und den Statorpaketen 4 aufrecht erhält.

Zur Spurführung des Magnetschwebefahrzeugs 1 weist die Fahrwegplatte 3 seitlich angebrachte Führschienen 8 auf, denen ebenfalls am Fahrzeug 1 montierte, nicht dargestellte Führmagnete gegenüber stehen, die beim Betrieb dazu dienen, zwischen sich und der Führschiene 8 einen dem Spalt 7 entsprechenden Spalt aufrechtzuerhalten.

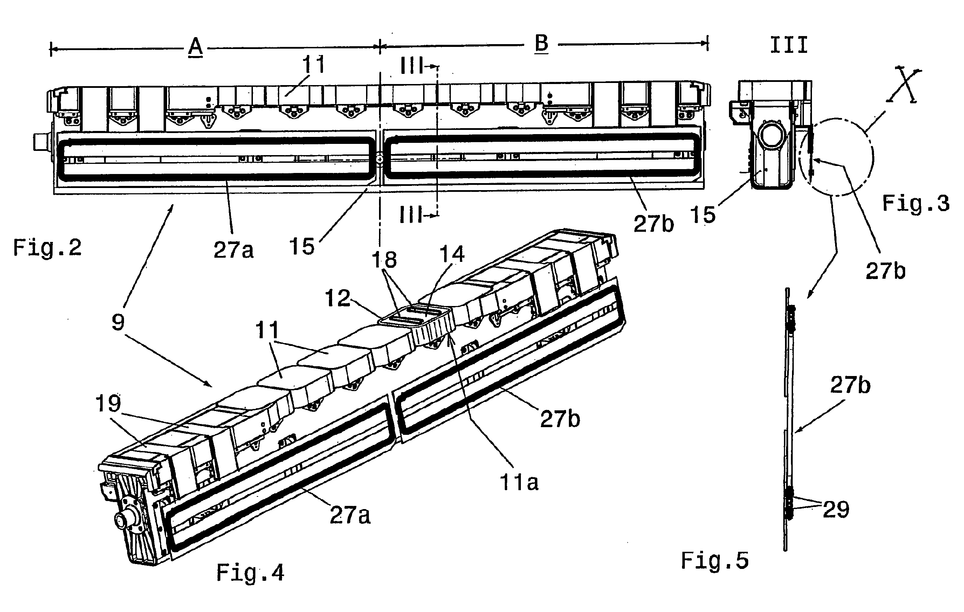

Gemäß Fig. 2 bis 5 bildet der in Fig. 1 gezeigte Tragmagnet 6 einen am Fahrzeug 1 befestigten Modul mit einer Magnetanordnung 9 für die Funktion "Tragen". Es ist jedoch klar, daß am Magnetschwebefahrzeug 1 seitlich nebeneinander und in Fahrtrichtung hintereinander in der Regel eine Vielzahl derartiger Module angebracht sein kann.

Die Magnetanordnung 9 enthält z.B. zwölf hintereinander angeordnete Magnetpole 11, deren elektrisch in Reihe geschaltete Wicklungen 12 und Kerne 14, die in Fig. 4 für einen der Magnetpole 11a schematisch angedeutet sind, normalerweise rundum von einem Korrosionsschutz in Form einer Gießharzschicht od. dgl. umgeben sind. Die Kerne 14 der einzelnen Magnetpole 11 sind untereinander durch nicht gezeigte Polrücken miteinander verbunden und mittels ebenfalls nicht dargestellter Polwangen und diese durchragender Stäbe an einem mit dem Fahrzeug 1 verbundenen Magnetrückenkasten 15 der Magnetanordnung 9 befestigt.

Magnetschwebefahrzeuge 1 und deren Magnetanordnungen sind dem Fachmann z.B. aus den Druckschriften US-PS 4,698,895, DE 39 28 277 C1, PCT WO 97/30 50 4 A1 und ZEVrail Glasers Annalen, Sonderheft Transrapid Oktober 2003, Seiten 34 bis 87 allgemein bekannt.

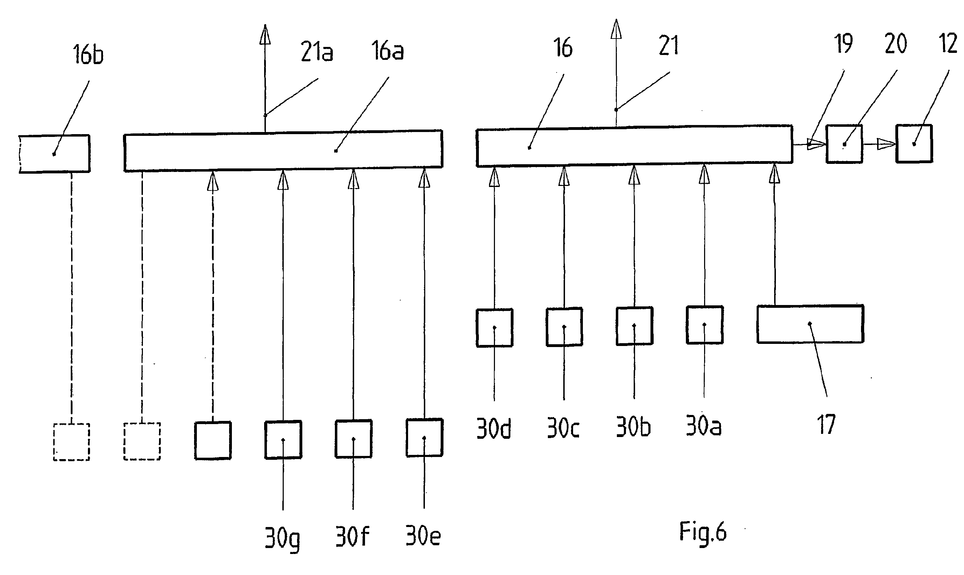

Zur Versorgung des Magnetschwebefahrzeugs 1 mit elektrischer Energie dient eine Energie-Versorgungsanlage, die in Fig. 6 schematisch anhand eines Blockschaltbilds dargestellt ist. Darin bezeichnet der Block 16 ein Bordnetz, das die verschiedenen elektrischen Einrichtungen des Fahrzeugs mit Energie versorgt. Das Bordnetz 16 wird seinerseits von wenigstens einem Lineargenerator 17 mit der erforderlichen Betriebsspannung versorgt. Der Lineargenerator 17 enthält in wenigstens einem Magnetpol (z.B. 11a in Fig. 4) angebrachte Wicklungen 18, die in Zusammenwirkung mit dem Langstator eine von der Geschwindigkeit des Fahrzeugs 1 abhängige Wechselspannung von z.B. bis zu 300 V liefern. Diese Spannung wird in einem z.B. einen Hochsetzsteller aufweisenden Spannungswandler in eine für den Betrieb vorgesehene Gleichspannung von z.B. 440 V des Bordnetzes 16 umgewandelt und von diesem z.B. einerseits mittels einer Leitung 19 einem Regler 20 für die Wicklungen 12 der Magnetpole 9 zugeführt, andererseits über eine Leitung 21 an andere Verbraucher im Magnetschwebefahrzeug 1 weitergeleitet.

Die Erzeugung der Bordenergie mit Hilfe der Lineargeneratoren 17 funktioniert nur in Fahrwegabschnitten, in denen die Geschwindigkeit des Magnetschwebefahrzeugs 1 eine bestimmte Mindestgröße erreicht. In anderen Fahrwegabschnitten erfolgt die Energieerzeugung daher bisher mit Hilfe von am Fahrweg verlegten Stromschienen, denen mechanische oder mechanisch-pneumatische Stromabnehmer zugeordnet sind.

Da Stromschienen und mechanische Stromabnehmer jedoch wegen der Verschleißneigung insbesondere bei hohen Geschwindigkeiten nicht immer erwünscht sind, ist erfindungsgemäß vorgesehen, die Energieübertragung vom Fahrweg 2, 3 auf das Magnetschwebefahrzeug 1 zusätzlich mit in Fig. 1 bis 5 dargestellten Mitteln zu bewirken.

Nach Fig. 1 ist z.B. an einer Stelle des Fahrwegs, an der bisher die Stromschiene für den Stromabnehmer angeordnet ist, ein als Sendespule bzw. Leiterschleife ausgebildeter Primärleiter 24 vorgesehen, der vorzugsweise je einen hin- und herlaufenden Leitungsabschnitt 24a, 24b enthält und sich zweckmäßig über die gesamte Länge des Fahrwegs 2, 3 erstreckt. Die beiden Leitungsabschnitte 24a, 24b sind z.B. mittels mehrerer, aus Isolatoren bestehender Halterungen 25 am Träger 2 befestigt. Der Primärleiter 24 liegt außerdem an einer nur schematisch dargestellten, hochfrequenten Spannungsquelle 26 von z.B. 300 V bis 500 V bei 20 kHz bis 200 kHz.

Am Magnetschwebefahrzeug 1 ist anstelle des Stromabnehmers eine Empfängerspule 27 (pick-up) montiert. Diese ist vorzugsweise so ausgebildet, daß sie den Primärleiter 24 nicht umgreift, sondern diesem mit einem geringen Abstand gegenübersteht. Dadurch ist es möglich, die Empfängerspule 27 im Magnetrückenkasten 15 oder in einer diesen abdeckenden Verkleidung 28 aus einem elektrisch isolierenden Material unterzubringen.

Nach einem bevorzugten Ausführungsbeispiel sind die Halterungen 25 in der Weise klappbar ausgebildet, daß der Primärleiter 24 nach oben oder unten schwenkbar am Träger 2 montiert ist und abschnittsweise weggeschwenkt werden kann. Es kann dadurch vermieden werden, daß der Primärleiter 24 bei Arbeiten, bei denen er im Weg ist, völlig demontiert werden muß.

Fig. 2 bis 4 zeigen, daß die Magnetanordnung 9 zwei Empfängerspule 27a und 27b aufweist, die je einem Halbmagneten A oder B zugeordnet sind. Beide Empfängerspulen 27a, 27b sind elektrisch vorzugsweise voneinander getrennt und daher dem Primärleiter 24 in der Weise gemeinsam zugeordnet, daß beide jeweils für sich zur Energieübertragung beitragen.

Jede in Fig. 2 und 4 mit einer dicken Linie dargestellte Empfängerspule 27a, 27b besteht vorzugsweise aus einer Mehrzahl von parallen Leitern 29 (Fig. 5), die eine so relativ zum Primärleiter 24 angeordnete Leiterschleife bilden, daß diese von den vom Primärleiter 24 bzw. von den Leitungsabschnitten 24a, 24b erzeugten, konzentrischen magnetischen Feldlinien durchdrungen werden und an ihren nicht dargestellten Anschlußenden die vom Primärleiter 24 gelieferte Spannung von ca. 300 V ausgekoppelt werden kann. Die beiden Anschlußenden können jeweils mit einem nicht gezeigten Spannungswandler verbunden werden, der in Fig. 6 mit den zugehörigen Empfängerspulen 27a, 27b zu je einem Block 30a, 30b zusammengefaßt ist. Die ausgekoppelte und gleichgerichtete Spannung wird dem Bordnetz 16 zugeführt.

Die Empfängerspulen 27, 27a und 27b werden vorzugsweise als vorgefertigte Baugruppen gemeinsam mit den notwendigen Kontaktierungselementen, z.B. Steckverbindern, hergestellt und am Magnetrückenkasten 15 oder der Verkleidung 28 so montiert, daß sie Bestandteile der von der Magnetanordnung 9 gebildeten autonomen Baueinheit bilden.

Ein Vorteil der berührungslosen, mit Hilfe der Teile 24, 27 bewirkten Energieübertragung besteht darin, daß sie verschleißarm arbeitet und die ausgekoppelte Energie wie bei Anwendung einer Stromschiene von der Fahrtgeschwindigkeit unabhängig ist. Ein wenigstens ebenso wichtiger Vorteil besteht darin, daß bereits der bisher beschriebene Teil der Vorrichtung zur Energieübertragung redundant arbeitet, weil z.B. beim Ausfall der Empfängerwicklung 27a noch die andere Empfängerwicklung 27b arbeitet (bzw. umgekehrt).

Die Teile 24, 27 sind in Fig. 1 nur für die rechte Seite der Magnetschwebebahn dargestellt. Tatsächlich ist es jedoch sinnvoll, dieselbe Anordnung auch auf der linken Seite der Magnetschwebebahn vorzusehen, in welchem Fall die Redundanz verdoppelt würde. Das ist in Fig. 6 durch zwei zusätzliche Blöcke 30c und 30d angedeutet.

Eine weitere Erhöhung der Redundanz wird erhalten, wenn die in Fig. 2 bis 4 gezeigten Empfängerspulen 27a, 27b nicht gemeinsam an derselben Primärleitung arbeiten, sondern einzeln je einer separaten, mit je einer hochfrequenten Spannungsquelle verbundenen Primärleitung zugeordnet werden. Das kann z.B. dadurch bewirkt werden, daß die beiden Empfängerspulen 27a, 27b in Fig. 2 und 4 nicht nebeneinander, sondern in zwei Wicklungsebenen übereinander angeordnet werden. In diesem Fall würden in Fig. 1 zwei separate Primärleiter 24 vorgesehen und in einem dem Abstand der beiden Wicklungsebenen entsprechenden Abstand übereinander angeordnet. Wird dieselbe Anordnung auch auf der anderen Fahrzeugseite getroffen, dann ergibt sich im Hinblick auf den Primärleiter 24 eine vierfache und im Hinblick auf die Empfängerspulen 27a, 27b wenigstens eine achtfache Redundanz. Die für einen gesicherten Betrieb relevanten Funktionen können daher lebensdauersicher realisiert werden.

Die Redundanz hinsichtlich der Empfängerspulen 27 kann bei üblichen Magnetschwebefahrzeugen noch wesentlich gesteigert werden, da diese normalerweise über eine Mehrzahl von Magnetanordnungen 9 verfügen, die sämtlich auf die beschriebene Weise mit Empfängerspulen 27 versehen werden können. Dadurch läßt sich sicherstellen, daß Pufferbatterien für das Bordnetz 16 überflüssig werden und einfach entfallen können. Eine etwaige Notstromversorgung könnte dann mit einfachen, auf der Fahrwegseite angeordneten Bleibatterien sichergestellt werden.

Im übrigen erstrecken sich die Primärleiter 24 zweckmäßig über die gesamte Länge des Fahrwegs. Die Magnetschwebefahrzeuge können dann ohne Rücksicht auf die Funktion der Lineargeneratoren in jedem beliebigen Bereich des Fahrweges angehalten werden. Daraus folgt, daß bei richtiger Auslegung und ausreichender Redundanz der erfindungsgemäßen Energieeinspeisung auf die Anwendung sowohl der Fahrzeug-Batterien als auch auf Lineargeneratoren od. dgl. vollkommen verzichtet werden kann, wodurch insbesondere der in den Fahrzeugen erforderliche Installationsaufwand wesentlich reduziert wird, wie es dem derzeit für am besten gehaltenen Ausführungsbeispiel der Erfindung entspricht.

Die Erfindung ist nicht auf das beschriebene Ausführungsbeispiel beschränkt, das auf vielfache Weise abgewandelt werden kann. Dies gilt insbesondere für die Zahl der pro Magnetschwebefahrzeug insgesamt vorhandenen Empfängerspulen 27 und die Zahl der am Fahrweg vorhandenen, mit je einer separaten, hochfrequenten Spannungsquelle verbundenen Primärleiter 24. Dabei ist es zweckmäßig, die Spannungsquellen in den üblichen, längs des Fahrwegs verteilt angeordneten Unterwerken zu installieren, in denen u. a. die zur Speisung der Langstator-Wicklungen benötigten Umrichter und dgl. untergebracht sind. In denselben Unterwerken werden zweckmäßig einfache, mit den Primärleitern 24 verbundene bzw. verbindbare Bleibatterien als Pufferbatterien für Notfälle od. dgl. angeordnet. Weiter ist es, ebenfalls aus Redundanzgründen, besonders vorteilhaft, in jedem Magnetschebefahrzeug zwei oder mehr getrennte Bordnetze 16, 16a bzw. 16b vorzusehen, die an wenigstens je eine separate Empfängerspule 27 angeschlossen sind, wie in Fig. 6 durch weitere Blöcke 30e, 30f und 30g angedeutet sein soll. Schließlich versteht sich, daß die verschiedenen Merkmale auch in anderen als den dargestellten und beschriebenen Kombinationen angewendet werden können.

## Patentansprüche

1. Magnetschwebebahn mit einem Fahrweg (2, 3), wenigstens einem Magnetschwebefahrzeug (1), einem Langstator-Linearmotor (4, 5, 6) zum Antrieb des Fahrzeugs (1) und einer Vorrichtung zur berührungslosen, induktiven Übertragung elektrischer Energie vom Fahrweg (2, 3) auf das Fahrzeug (1), **dadurch gekennzeichnet, daß** die Vorrichtung zur berührungslosen Energieübertragung von der Fahrtgeschwindigkeit unabhängig und zur Versorgung eines Bordnetzes vorgesehen ist und zwei am Fahrzeug (1) montierte, als Leiterwicklungen ausgebildete Empfängerspule (27a, 27b) und am Fahrweg (2, 3) wenigstens einen in dessen Längsrichtung erstreckten, an eine hochfrequente Wechselspannungsquelle (26) angeschlossenen Primärleiter (24) aufweist, wobei die beiden Empfängerspule (27a, 27b) entweder gemeinsam demselben Primärleiter (24) oder einzeln je einem von zwei Primärleitern zugeordnet sind.

2. Magnetschwebebahn nach Anspruch 1, **dadurch gekennzeichnet, daß** am Fahrweg (2, 3) wenigstens zwei, an je eine hochfrequente Spannungsquelle (26) angeschlossene Primärleiter (24) vorgesehen und jedem Primärleiter (24) wenigstens zwei am Fahrzeug (1, 3) vorgesehene Empfängerspulen (27a, 27b) zugeordnet sind.

3. Magnetschwebebahn nach Anspruch 2, **dadurch gekennzeichnet, daß** jedem Primärleiter (24) mehr als zwei Empfängerspulen (27a, 27b) zugeordnet sind.

4. Magnetschwebebahn nach Anspruch 3, **dadurch gekennzeichnet, daß** am Fahrweg (2, 3) wenigstens vier, an je eine hochfrequente Spannungsquelle (26) angeschlossene Primärleiter (24) vorgesehen und jedem Primärleiter (24) wenigstens je zwei Empfängerspulen (27a, 27b) zugeordnet sind.

5. Magnetschwebebahn nach einem der Ansprüche 1 bis 4, **dadurch gekennzeichnet, daß** das Magnetschwebefahrzeug (1) mit Tragmagneten (6) versehen ist und die Empfängerspulen (27a, 27b) an den Tragmagneten (6) montiert sind.

6. Magnetschwebebahn nach einem der Ansprüche 1 bis 5, **dadurch gekennzeichnet, daß** wenigstens so viele mit irgendeinem der Primärleiter (24) zusammenwirkende Empfängerspulen (27a, 27b) vorhanden sind, wie der Zahl der voneinander unabhängigen Bordnetze (16, 16a, 16b) im Magnetschwebefahrzeug (1) entspricht.

7. Magnetschwebebahn nach einem der Ansprüche 1 bis 6, **dadurch gekennzeichnet, daß** die Primärleiter (24) über die ganze Länge des Fahrwegs (2, 3) erstreckt sind.

8. Magnetschwebebahn nach einem der Ansprüche 1 bis 7, **dadurch gekennzeichnet, daß** etwaige Pufferbatterien für die Fahrzeugenergie anstatt am Fahrzeug (1) im Fahrweg (2, 3) untergebracht sind.

9. Magnetschwebebahn nach Anspruch 8, **dadurch gekennzeichnet, daß** die Pufferbatterien in längs des Fahrwegs (2, 3) verteilt angeordneten Unterwerken installiert sind.

10. Magnetschwebebahn nach einem der Ansprüche 1 bis 7, **dadurch gekennzeichnet, daß** weder im Fahrzeug (1) noch am Fahrweg (2, 3) Pufferbatterien vorgesehen sind.

## Claims

1. A magnetic levitation railway comprising a guideway (2, 3), at least one magnetic levitation vehicle (1), a long-stator linear motor (4, 5, 6) for driving the vehicle (1) and a device for contactless, inductive transmission of electrical energy from said guideway (2, 3) to said vehicle (1), **characterized in that** said device for the contactless transmission of energy is independent from the vehicle speed and provided for the supply of the on-board power supply network and comprises two receiver coils (27a, 27b) being formed by conductor windings and mounted on the vehicle and at least one primary conductor (24) extending in the longitudinal direction of the guideway and being connected to a high-frequency alternating voltage source (26), wherein the two receiver coils (27a, 27b) are assigned either jointly to the same primary conductor or individually to one of two primary conductors each.

2. A magnetic levitation railway according to Claim 1, **characterized in that** at least two primary conductors (24) connected to a high-frequency voltage source (26) each are mounted at the guideway (2, 3) and that at least two receiver coils (27a, 27b) mounted at said vehicle (1, 3) are assigned to each primary conductor (24).

3. A magnetic levitation railway according to Claim 2, **characterized in that** more than two receiver coils (27a, 27b) are assigned to each primary conductor (24).

4. A magnetic levitation railway according to Claim 3, **characterized in that** at least four primary conductors (24) connected to a high-frequency voltage source (26) each are mounted at the guideway (2, 3) and that at least two receiver coils (27a, 27b) are assigned to each primary conductor (24).

5. A magnetic levitation railway according to any of the preceding Claims 1 to 4, **characterized in that** said magnetic levitation vehicle (1) is provided with carrying magnets (6) and that the receiver coils (27a, 27b) are mounted at the carrying magnets (6).

6. A magnetic levitation railway according to any of the preceding Claims 1 to 5,
**characterized in that** at least as many receiver coils (27a, 27b) cooperating with any primary conductor (24) are provided as corresponds to the number of independent onboard networks (16, 16a, 16b) in the magnetic levitation vehicle (1).

7. A magnetic levitation railway according to any of the preceding Claims 1 to 6, **characterized in that** the primary conductors (24) extend over the entire length of said guideway (2, 3).

8. A magnetic levitation railway according to any of the preceding Claims 1 to 7, **characterized in that** buffer batteries, if any, for the vehicle energy are accommodated in the guideway (2, 3) rather than on the vehicle (1).

9. A magnetic levitation railway according to Claim 8, **characterized in that** the buffer batteries are built-in substructures mounted in spaced arrangement along the guideway (2, 3).

10. A magnetic levitation railway according to any of the preceding Claims 1 to 7, **characterized in that** buffer batteries are provided neither in the vehicle (1) nor at the guideway (2, 3).

## Revendications

1. Train à sustentation magnétique comprenant une voie de circulation (2, 3), au moins un véhicule à sustentation magnétique (1), un moteur linéaire à stator long (4, 5, 6) pour entraîner le véhicule (1) et un dispositif de transmission inductive, sans contact, d'énergie électrique de la voie de circulation (2, 3) au véhicule (1), **caractérisé en ce que** le dispositif de transmission d'énergie sans contact est indépendant de la vitesse de marche et prévu pour l'alimentation d'un réseau de bord et présente deux bobines réceptrices (27a, 27b), réalisées sous la forme d'enroulements de conducteurs, montées sur le véhicule (1) et, sur la voie de circulation (2, 3), au moins un conducteur primaire (24) s'étendant dans sa direction longitudinale, raccordé à une source de tension alternative à haute fréquence (26), les deux bobines réceptrices (27a, 27b) étant associées soit en commun au même conducteur primaire (24), soit individuellement chacune à un de deux conducteurs primaires.

2. Train à sustentation magnétique selon la revendication 1, **caractérisé en ce que** sur la voie de circulation (2, 3), il est prévu au moins deux conducteurs primaires (24) raccordés chacun à une source de tension à haute fréquence (26) et qu'à chaque conducteur primaire (24) sont associées au moins deux bobines réceptrices (27a, 27b) prévues sur le véhicule (1, 3).

3. Train à sustentation magnétique selon la revendication 2, **caractérisé en ce que** plus de deux bobines réceptrices (27a, 27b) sont associées à chaque conducteur primaire (24).

4. Train à sustentation magnétique selon la revendication 3, **caractérisé en ce que** sur la voie de circulation (2, 3), il est prévu au moins quatre conducteurs primaires (24) raccordés chacun à une source de tension à haute fréquence (26) et qu'à chaque conducteur primaire (24) sont associées au moins deux bobines réceptrices (27a, 27b).

5. Train à sustentation magnétique selon l'une des revendications 1 à 4, **caractérisé en ce que** le véhicule à sustentation magnétique (1) est pourvu d'aimants porteurs (6) et les bobines réceptrices (27a, 27b) sont montées sur les aimants porteurs (6).

6. Train à sustentation magnétique selon l'une des revendications 1 à 5, **caractérisé en ce qu'**il y a au moins autant de bobines réceptrices (27a, 27b) coopérant avec un quelconque des conducteurs primaires (24) que de réseaux de bord (16, 16a, 16b) indépendants les uns des autres dans le véhicule à sustentation magnétique (1).

7. Train à sustentation magnétique selon l'une des revendications 1 à 6, **caractérisé en ce que** les conducteurs primaires (24) s'étendent sur toute la longueur de la voie de circulation (2, 3).

8. Train à sustentation magnétique selon l'une des revendications 1 à 7, **caractérisé en ce qu'**éventuelles batteries tampon pour l'énergie du véhicule sont placées dans la voie de circulation (2, 3) au lieu de sur le véhicule (1).

9. Train à sustentation magnétique selon la revendication 8, **caractérisé en ce que** les batteries tampon sont installées dans des sous-stations réparties le long de la voie de circulation (2, 3).

10. Train à sustentation magnétique selon l'une des revendications 1 à 7, **caractérisé en ce que** des batteries tampon ne sont prévues ni dans le véhicule (1) ni sur la voie de circulation (2, 3).
